# EUROPEAN PATENT SPECIFICATION

(11) **EP 2 363 360 B1**
(45) Date of publication and mention of the grant of the patent: **23.01.2013**
(21) Application number: 11166105.4
(22) Date of filing: 27.04.2005
(51) Int. Cl.: B65G 53/28

(54) **A method and an apparatus for conveying particulate material**
Verfahren und Vorrichtung zum Fördern von körnigem Gut
Appareil de transport de matériaux granuleux et procédé

(30) Priority: 27.04.2004 GB 0409318
(43) Date of publication of application: 07.09.2011
(62) Divisional of application: 05738226.9
(73) Proprietor: HALLIBURTON ENERGY SERVICES, INC., Duncan, OK 73536-0440 (US)
(72) Inventor: Morris, Ronald George, Montrose, DD10 8SR (GB)
(74) Representative: Brown, James Douglas

(56) References cited:
- WO-A-00/55073
- DE-A1- 2 437 799
- GB-A- 2 087 335
- GB-A- 2 096 965
- US-A- 4 695 205
- US-A1- 2002 187 012

## Description

The present invention relates to apparatus and a method for transporting material, and particularly but not exclusively relates to apparatus and a method for transporting non free flowing or relatively sticky paste-like materials such as those produced by hydrocarbon exploration and production operations.

In the hydrocarbon exploration and production industry it is often necessary to transfer large quantities of material from, for example, a drill rig to a transport vessel in order that the material can then be transported to an on-shore location for further processing/disposal. The materials used in/created by drilling operations such as drill cuttings, pastes or sludge are often highly viscous substances which are therefore difficult to transport due to their cohesive properties. One way of transporting such materials is to empty them into a container or skip and then transport the container or skip onto a vessel; however manoeuvring the container or skip around the rig, as required in such a method, presents a number of dangers to personnel operating on the rig.

Document US-A-4695205 discloses a method of transferring material and a material transfer apparatus comprising a first container containing fluid, a second container upstream said first container, material transfer means adapted to transfer material from a first location outside the container to a second location inside said container, and material urging means adapted to facilitate transfer of the material from said first to said second location by at least partially evacuating fluid from within the first container.

In order to transfer drill cuttings from the rig to the vessel more safely it is known to transfer the drill cuttings firstly to a number of large holding tanks. When the holding tanks are full, they are connected via tubing to transport tanks on board a transport vessel and transferred thereto using compressed air or a similar propellant in order to assist progression of the material along the tubing; however such systems can become blocked due to the difficulty in obtaining a large enough pressure differential along the long distance of tubing between the rig and the vessel. The tendency for highly viscous materials to stick together rather than to flow, combined with the fact that the long tubing has a tendency to sag thereby creating certain areas along the pipe where the flow of the highly viscous materials must act against gravity, makes blockages along the pipe more likely.

According to the present invention there is provided a method of transferring material from a first location to a second location according to claim 1.

Preferably, the transfer of material from the first location to the second location and evacuating the fluid from the container are performed substantially simultaneously.

Preferably, the method further comprises the step of transferring the material along a first conduit under application of pressure upstream of the material, in order to progress the material from a first location outside of the container to a second location inside the container.

Preferably, the method further comprises the step of at least partially evacuating the fluid, which is preferably gaseous and is more preferably air, from the container along a second conduit in order to substantially create a vacuum within the container.

Preferably, the fluid is at least partially evacuated from the container whilst substantially avoiding removal of the material from the container. Preferably, the method further comprises the step of providing a second container, which is typically upstream of the first container, where the second upstream container typically provides a temporary storage facility for material to be transported.

Typically, the method further comprises the step of providing a first pumping means for pumping material which may be from a source of material into the second container under pressure such that the material may be deposited in the second container prior to being transferred to the first container. More preferably, pressure is applied to the second container and the material therein when the second container contains a desired level of material. More preferably, the second container is then emptied by evacuating at least a portion of the material within the second container, typically along a discharge conduit, which action is preferably assisted by the pressure applied to the second container.

Preferably, the discharge conduit is in fluid communication with the first conduit via an intermediate or transfer pumping and/or vacuum generation means in order to allow the material from the second container to be conveyed to the first container.

Typically, the first container is located on a transportation means such as a sea going vessel and the second container is located proximal to the first pumping means and also is preferably located proximal to a supply of the material such as a primary drill cuttings source such as on a drilling rig. Preferably, the intermediate or transfer pumping and/or vacuum generation means is located proximal to and downstream of the second container. Typically, a transfer conduit connects the intermediate or transfer pumping and/or vacuum generation means to the first container.

Preferably, the material comprises drill cuttings.

According to the present invention there is provided a material transfer apparatus according to claim 13.

Preferably, the material transfer means comprises a first tubular conduit which passes through an inlet portion of the container and more preferably further comprises an intermediate or transfer pumping and/or vacuum generation means connected thereto.

Preferably, the intermediate or transfer pumping and/or vacuum generation means comprises a pump and a vacuum device and is adapted to be selectively switched between the pumping and vacuum producing modes as desired.

Preferably, the intermediate or transfer pumping and/or vacuum generation means also comprises an intermediate storage tank and is typically located upstream of the container.

Preferably, the material urging means comprises a second tubular conduit which passes through an outlet portion of the container and more preferably further comprises vacuum generation means connected thereto.

Preferably, the inlet and outlet portions are spaced apart across a diameter of the first container in order to prevent material exiting the inlet portion from entering the outlet portion. Optionally, a filter may also be provided on the outlet portion to further prevent the material from entering the outlet portion and hence the vacuum generation means. Typically, the inlet and outlet portions are located toward the upper end of the first container.

Typically, the fluid is gaseous and preferably is air.

Typically, the material is a highly viscous material which is typically drill cuttings or similar hydrocarbon exploration and production industry by-products.

Embodiments of the invention have the advantage that they allow material to be pumped by the intermediate or transfer pumping and/or vacuum generation means along the first conduit until it is expelled into the container from the inlet portion on the first conduit. The progression of the material along the first conduit and into the container is eased and/or assisted by the simultaneous substantial vacuum provided across the diameter of the container as provided by the second conduit and the vacuum generation means.

The apparatus further comprises a second container which contains material which has preferably been pressurised and which is typically located upstream from the first container and which is further preferably located upstream from the intermediate or transfer pumping and/or vacuum generation means. Typically, the second container is connected to the first container such that material may be transferred therebetween. More preferably, the connection between the first and second containers passes through at least a portion of the intermediate or transfer pumping and/or vacuum generation means.

This allows a small amount (limited by the maximum volume of the intermediate or transfer pumping and/or vacuum generation means) of material to be sucked by the vacuum of the intermediate or transfer pumping and/or vacuum generation means from the second container and into an intermediate storage tank of the intermediate or transfer pumping and/or vacuum generation means. The pressurised contents of the second container typically assist in this regard by providing a positive pressure differential from the inside of the second container to the outside. When the intermediate storage tank is full the intermediate or transfer pumping and/or vacuum generation means is then switched either manually or automatically to its pumping mode in order to pump the contents of the intermediate storage tank into the first container (which is assisted by the vacuum produced in the first container by the second conduit and vacuum generation means).

Typically, the first and/or second containers are large, silo-type containers which are typically cylindrical in shape. Preferably, the or each container is provided with a plurality of circumferentially arranged material chutes, preferably having a multi-sided (which in preferred embodiments is hexagonal) cross section, adapted to substantially prevent the material within the or each container from becoming compacted such that the material will no longer flow. Preferably, a separation device, which is preferably a cone having a multisided (which in preferred embodiments is hexagonal) cross section, is provided adjacent the chutes in order to substantially prevent large lumps of material from settling within the chutes. Alternatively, a standard conically shaped silo chute may be provided on the or each container.

An embodiment of the present invention will now be described with reference to the accompanying drawings, in which:-
Fig. 1 is a schematic diagram showing the flow of drill cuttings through apparatus in accordance with the present invention;
Fig. 2A is a schematic front view diagram of a tank used in the apparatus of Fig. 1;
Fig. 2B is a plan view of the top of the tank of Fig. 2A looking in the direction indicated by the reference lines B-B;
Fig. 2C is a partial cross-sectional side elevation of the tank of Fig. 2A;
Fig. 2D is a cross-sectional view of the valve arrangement on the bottom of the tank of Fig. 2A taken through the line C-C;
Fig. 2E is a partial cross-sectional view of the tank of Fig. 2C looking in the direction indicated by reference line D; and
Fig. 2F is a cross-sectional view of the tank of Fig. 2E taken through the line E-E showing the hexagonal chute and cone arrangement used in conjunction with a preferred embodiment of the apparatus.

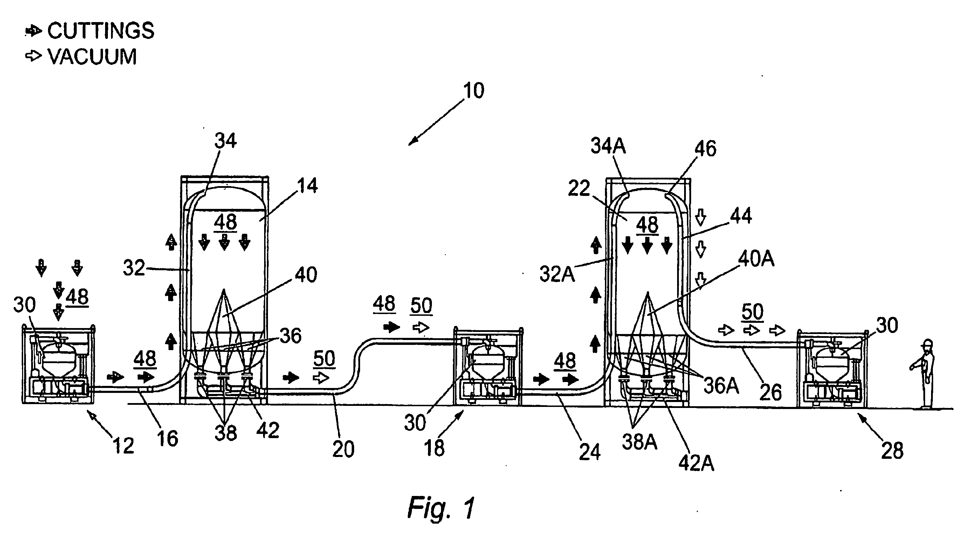

Referring to Fig. 1, drill cutting material transportation apparatus 10 is provided. The apparatus 10 has a first vacuum/pump unit 12 connected to a holding tank 14 by a holding tank input pipe 16. The holding tank 14 is connected to a second vacuum/pump unit 18 by a holding tank output pipe 20. The second vacuum/pump unit 18 also connects to a transportation tank 22 via a transfer pipe 24. A vacuum pipe 26 connects to a third vacuum/pump unit 28 and is in fluid communication with the inside of the transportation tank 22.

The vacuum/pump units 12, 18, 28 can be selectively switched between a vacuum mode which sucks material into an integrated transfer tank 30 and a pumping mode which blows material out of the integrated transfer tank 30 under pressure. The pressure differential required for both the vacuum and pumping modes is provided by an air compressor (not shown) attached to or integrated with the units 12, 18, 28. An example of a preferred unit 12, 18, 28 able to provide such pumping and vacuum capabilities is the SUPAVAC™ system distributed worldwide for the oil and gas industry by ITS Drilling Services Limited of Aberdeen, UK, but the skilled reader will realise that other conventional vacuum/pump units may also be suitable although such other conventional vacuum/pump units may not operate as quickly nor as efficiently.

The holding tank 14 and transportation tank 22 are large cylindrical tanks 14, 22 which are able to hold a relatively large volume of material. Typically, the holding tank 14 and transportation tank 22 are each able to hold around 15m³ to 20m³ of material, though it should be noted that smaller or larger tanks could be used without affecting the overall operation of the apparatus 10.

The holding tank 14 is provided with an external upright pipe 32 which extends from the bottom of the tank 14 to the roof of the tank 14 at which point it terminates with an aperture 34, such that the interior of the external upright pipe 32 is in fluid communication with the interior of the holding tank 14. The bottom of the external upright pipe 32 is connected to the first vacuum unit 12 by the holding tank input pipe 16. Though the upright pipe 32 is provided externally in the apparatus 10 shown in the Figures, it should be appreciated that this upright pipe may alternatively be provided internally.

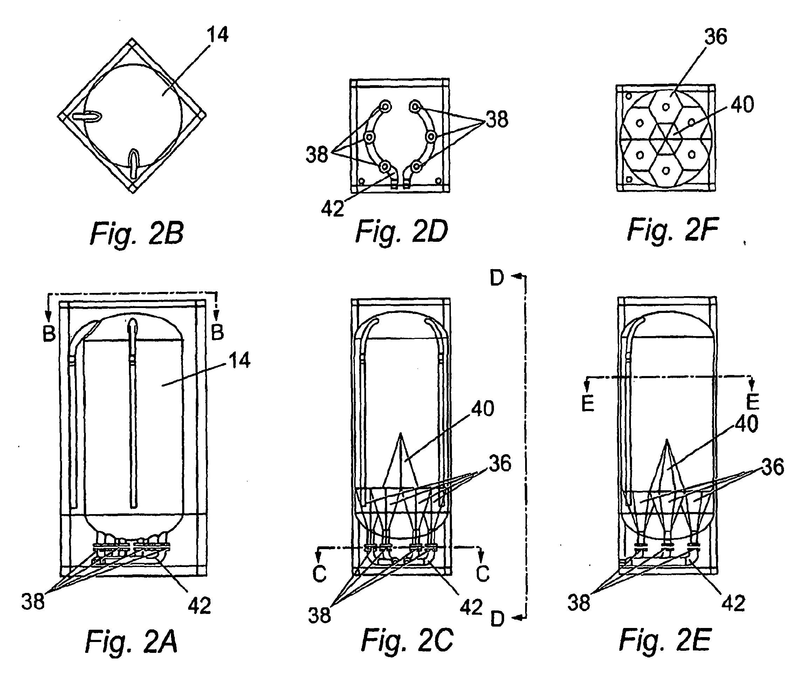

The bottom of the holding tank 14 may simply have a standard flat or conically shaped exit chute connected to outlet valves; however in the present and preferred embodiment (as best seen in Figs. 2C, 2E and 2F) a number of hexagonal chutes 36 are provided around the circumference of the tank 14 bottom in a honeycomb arrangement. A cone 40 having a hexagonal cross section is also provided in the centre of the circumferentially arranged hexagonal chutes 36, the purpose of which will be described subsequently. A suitable honeycomb shaped insert 36 is described in PCT Application No WO 00/55073.

The lowermost point of each chute 36 is provided with an outlet discharge valve 38 connected to discharge tubes 42 which converge onto the end of the holding tank output pipe 20.

A substantial number of components on the transportation tank 22 are substantially the same as the holding tank 14 and will therefore not be described further. In the following description, where this applies the same reference numeral has been used with an additional A being suffixed to the reference numeral.

Unlike the holding tank 14, the discharge tubes 42A of the transportation tank 22 are not connected to an output pipe in the arrangement shown in Fig. 1. In addition however, a further external upright pipe 44 is provided for the tank 22 opposite the external inlet upright pipe 32A. A vacuum pipe inlet aperture 46 is provided on the upper end of the additional external upright pipe 44, the purpose of which will be described subsequently. The additional external upright pipe 44 extends downwardly from the vacuum pipe inlet aperture 46 and connects to the vacuum pipe 26 which leads on to the third vacuum unit 28.

It should be noted that the length of the pipes 16, 20, 24, 26 in Fig. 1 are not to scale and have been altered for clarity. Indeed the transfer pipe 24 must be long enough to allow material to be transported from the vacuum unit 18 adjacent the holding tank 14 located on the rig (not shown) to the transportation tank located on the supply vessel (not shown) and this distance is likely to vary in length per application or project, typically from 10m to 200m in length.

In the following description the flow of drill cuttings throughout the apparatus 10 is illustrated by dark shaded arrows 48 on Fig. 1 and the negative suction (or vacuum) pressure differential created by the vacuum units 12, 18, 28 is illustrated by the unshaded arrows 50.

In operation, the vacuum mode of the first vacuum unit 12 is switched on. This creates a vacuum in the tank 30 which sucks drill cuttings 48 into the tank 30. It should be noted that the drill cuttings 48 are initially output from a primary drill cutting treatment equipment such as shale shaker/centrifuge etc. such as those typically used in drilling operations. The vacuum in the transfer tank 30 is sustained until the transfer tank 30 is filled with drill cuttings 48 which typically occurs when around 400 litres are contained within the tank 30. When full, the transfer tank 30 can no longer suck drill cuttings 48 and must now be emptied.

In order to empty the tank 30, the first vacuum unit 12 is switched to its pumping mode. In its pumping mode, compressed air is introduced into the tank 30 by the compressor (not shown). The increased pressure within the tank 30 expels the drill cuttings 48 within the tank 30 into the holding tank input pipe 16. The drill cuttings 48 are progressed up the upright pipe 32 due to pressure of compressed air in the tank 30 acting upon them until they reach the internal inlet aperture 34, at which point the drill cuttings 48 enter the holding tank 14. Gravity causes the drill cuttings 48 to fall toward the bottom of the tank 14 and in so doing begins to fill the holding tank 14 from the bottom upwards.

Once the first vacuum unit 12 has expelled the contents of its tank 30 into the holding tank 14, it is then switched back to vacuum mode (either automatically or by a manual operator) in order to refill with drill cuttings 48 from the shale shaker/ centrifuge, etc. on the rig platform (not shown). Once filled with the next load of drill cuttings 48 the first vacuum unit 12 empties its contents into the tank 14 in a similar fashion as previously described. This cyclical filling and emptying of the tank 30 is repeated by the first vacuum unit 12 until the holding tank 14 is filled to a desired level determined by the user. The weight, and hence volume, of material within the holding tank 14 can be calculated by the user by subtracting the known empty weight of the holding tank 14 from the total weight of the holding tank 14 in operation whilst taking into account the effect of the specific gravity of the material (when calculating the volume).

It should be noted that the vacuum units 12, 18, 28 have very few moving parts e.g. impellers etc. since these could be easily clogged up by the highly viscous material passing through the units. Instead, the vacuum units 12, 18, 28 mainly comprise chambers and valves (not shown) which, in conjunction with the compressed air supply can be manipulated to provide the necessary vacuum or pumping action as required.

Though a single holding tank 14 is shown in Fig. 1, in order to increase the capacity of the rig for retaining drill cuttings 48 before they must be offloaded, the rig may have a number of holding tanks 14. A typical number of holding tanks on the rig would be between 1 and 8 though more could be provided if the rig structure permits. When a number of holding tanks 14 are provided, the input pipe 16 is simply detached when the holding tank 14 to which it is connected is full, and is then reconnected to an empty holding tank 14.

When it is desired to transfer the contents of the holding tank 14 to, for example, a sea going supply vessel (not shown), one end of the holding tank output pipe 20 is connected to the discharge tubes 42 of the holding tank 14 to be emptied. The other end of the holding tank output pipe 20 is connected to the inlet of the second vacuum unit 18. The remaining space within the top of the holding tank 14 is then pressurised (while the discharge valves 38 are closed) either using an additional pressure source such as a pneumatic pump or the air compressor or using the first vacuum unit 12 in its pump mode. This pressurised zone results in the contents of the holding tank 14 being urged towards the bottom of the tank 14. The discharge valves 38 on the bottom of the holding tank 14 are then opened and the tank 30 on the second vacuum unit 18 is then filled by creating a vacuum in the tank 30 in a similar way to that previously described for the first vacuum unit 30. The vacuum 50 created along the output pipe 20 by the second vacuum unit 18 (combined with the pressure exerted on the drill cuttings 48 within the holding tank 14 by the pressurised zone) draws the drill cuttings 48 from the holding tank 14. When the tank 30 on the second vacuum unit 18 is filled with drill cuttings 48, the vacuum unit is switched off in preparation for pumping the drill cuttings 48 into the transportation tank 22 located on, for example, the supply vessel. A number of these transportation tanks 22 may be provided on the supply vessel e.g. from 1 to 20 tanks in order to maximise the drill cutting transport capacity of the supply vessel.

When the unit 18 is switched to pumping mode it begins to pump the drill cuttings 48 along the transfer pipe 24 by introducing compressed air into the tank 30. While the drill cuttings 48 are being pumped along the transfer pipe 24, the third vacuum unit 28 simultaneously operates in its vacuum mode in order to create a vacuum along the vacuum pipe 26. The vacuum present in the vacuum pipe 26 is communicated to the inside of the transportation tank 22 due to the open end of the vacuum pipe 26 provided by the vacuum pipe inlet aperture 46. The effect of the pumping action provided by the second vacuum unit 18 combined with the vacuum created in the transportation tank 22 provides a large pressure differential across the drill cuttings 48 travelling along the length of the transfer pipe 24. The magnitude of this pressure differential is substantially greater than that obtainable by only performing one of the pumping or sucking operations and is ideally suited to ensuring that the viscous material e.g. drill cuttings (which have a tendency to stick together and block pipes components) continue to flow through the apparatus 10. This is even true over the relatively long distance required to transfer the drill cuttings 48 (through the transfer pipe 24) from the rig platform to the supply vessel.

When the drill cuttings 48 reach the internal inlet aperture 34A they escape into the transportation tank 22 and fall under the action of gravity toward the bottom of the tank 22. It should be noted that the pressure differential across the transportation tank inlet aperture 34A and the vacuum pipe inlet aperture 46 is not great enough to suck the drill cuttings across the gap between these apertures. In this regard, when the drill cuttings 48 within the transportation tank 22 reach a certain level the transfer operation should be switched to another transportation tank (not shown) since if the transportation tank 22 is over filled, drill cuttings 48 would be more likely to enter the vacuum pipe 26, which is undesirable. When each transportation tank 22 on the vessel has been filled to the desired level, the transportation tank input pipe 24 is disconnected and the vessel may proceed to the onshore based processing/disposal facility.

The cone 40, 40A in the holding tank 14 and transportation tank 22 respectively serve to divide the drill cuttings 48 falling from the inlets 34, 34A between the chutes 36, 36A. The relatively small cross section of the plurality of chutes 36, 36A (when compared to the situation if only a single chute were located on the bottom of the tanks 14, 22) provide a number of smaller individual areas upon which the material above can press upon which makes hard packing of the drill cuttings located at the bottom of the tanks 14, 22 less likely.

When the transportation tanks 22 are to be emptied the remaining space within the top of the transportation tank 22 can be pressurised (while the discharge valves 38A are closed) either using an additional pressure source such as a pneumatic pump (not shown) or using the third vacuum unit 28 in the pump mode (and/or if it is available, the second unit 18, as will be described subsequently). This pressurised zone results in the contents of the transportation tank 22 being urged towards the bottom of the tank 22 in a similar fashion to that previously described for the holding tank 14. The discharge valves 38A on the bottom of the transportation tank 22 are then opened and the contents either removed simply due to the pressurisation in the transportation tank 22 or by attaching it to a further vacuum unit (not shown).

Modifications and improvements may be made to the embodiments hereinbefore described without departing from the scope of the invention.

For instance, although the embodiment of the apparatus 10 described above is used to transfer drill cuttings, the apparatus 10 may be used to transfer any material which will flow through a pipe, and is particularly useful for transporting Materials which would otherwise tend to become stuck in pipes.

The vacuum units 12, 18 may be substituted with any vacuum unit, particularly those capable of both acting as a vacuum and as a pump without becoming clogged with the material passing though it. The vacuum unit 28 may be substituted by a unit capable of creating a powerful enough vacuum.

Furthermore, the second vacuum/pumping unit 18 could instead be situated on the supply vessel rather than on the drilling rig; in this case, the transfer pipe would be regarded as pipe 20 (suitably lengthened) and the pipe 24 would be suitably shortened.

## Claims

1. A method of transferring material (48) from a first location to a second location comprising the steps of:-
providing a first container (22) containing fluid (50); providing a second container (14) upstream of the first container (22)
transferring material (48) from a first location outside of the first container (22) to a second location inside the first container (22); and
at least partially evacuating fluid (50) from within the first container (22) in order to facilitate progression of the material (48) into the first ntainer (22);
**characterised by**
providing a first pumping means (12) for pumping material (48) into the second container (14) under pressure such that the material (48) is deposited in the second container (14) prior to being transferred to the first container (22).

2. A method according to claims 1, wherein the transfer of material from the first location to the second location and evacuating the fluid (50) from the first container (22) are performed substantially simultaneously.

3. A method according to either of claims 1 or 2, wherein the method further comprises the step of transferring the material (48) along a first conduit (20; 24) under application of pressure upstream of the material (48), in order to progress the material from a first location outside of the first container (22) to a second location inside the first container (22); and
wherein the method further comprises the step of at least partially evacuating air (50) from the first container (22) along a second conduit (26) in order to substantially create a vacuum within the first container (22).

4. A method according to any preceding claim, wherein the fluid (50) is at least partially evacuated from the first container (22) whilst substantially avoiding removal of the material (48) from the container (22).

5. A method according to any preceding claim, wherein the second upstream container (14) provides a temporary storage facility for material (48) to be transported.

6. A method according to claim 3 or to claims 4 or 5 when dependent upon claim 3, wherein the step of transferring the material (48) comprises increasing the pressure within the second container (14) such that the increased pressure acts on and expels all the material (48) within the second container (14) into a discharge conduit (42) and subsequently into the first conduit (20; 24).

7. A method according to according to claim 3 or to claims 4 or 5 when dependent upon claim 3, wherein the step of transferring the material (48) comprises pressurising the space above the material (48) at the top of the second container (14) which results in all of the material (48) within the second container (14) being urged toward the bottom of the second container (14) and into a discharge conduit (42) and subsequently into the first conduit (20; 24).

8. A method according to any preceding claim, wherein pressure is applied to the second container (14) and the material (48) therein when the second container (14) contains a desired level of material (48); and
wherein the second container (14) is then emptied by evacuating at least a portion of the material (48) within the second container (14), along a discharge conduit (42).

9. A method according to claim 8 and 3, wherein the pressure applied to the second container (14) combined with evacuating the fluid (50) from the first container (22) provides a pressure differential across the material (48) travelling along the length of the first conduit (20; 24).

10. A method according to claim 8 and 3, wherein the action of evacuating at least a portion of the material (48) along the discharge conduit (42) is assisted by the pressure applied to the second container (14); and
wherein the discharge conduit (42) is in fluid communication with the first conduit (20; 24) via an intermediate vacuum generation means (18) in order to allow the material from the second container (14) to be conveyed to the first container (22).

11. A method according to claim 10, wherein the first container (22) is located on a transportation means and the second container (14) is located proximal to the first pumping means (12) and also is located proximal to a supply of the material (48) in the form of a primary drill cuttings source on a drilling rig; and
wherein the intermediate transfer vacuum generation means (18) is located proximal to and downstream of the second container (14); and
wherein a transfer conduit (24) connects the intermediate vacuum generation (18) means to the first container (22).

12. A method according to any preceding claim, wherein the material (48) comprises drill cuttings (48).

13. Material transfer apparatus (10) comprising:-
a first container (22) containing fluid (50);
material transfer means adapted to transfer material (48) from a first location (12, 14, 18) outside the first container (22) to a second location inside the first container (22); a second container (14) located upstream from the first container (22) and
material urging means (28) adapted to facilitate transfer of the material (48) from the first location (12, 14, 18) to the second location inside the first container (22) by at least partially evacuating fluid from within the first container (22);
**characterised by**
a first pumping means (12) for pumping material into the second container (14) under pressure such that the material (48) is deposited in the second container (14) prior to being transferred to the first container (22).

14. Material transfer apparatus (10) according to claim 13, further comprising a first tubular conduit (20; 24) which passes through an inlet portion (34A) of the first container (22) and an intermediate vacuum generation means (18) connected thereto.

15. Material transfer apparatus (10) according to claim 14, wherein the intermediate vacuum generation means (18) comprises a pump and a vacuum device and is adapted to be selectively switched between the pumping and vacuum producing modes as desired; and
wherein the intermediate vacuum generation means (18) also comprises an intermediate storage tank (30) and is located upstream of the first container (22); and wherein
the material urging means (28) comprises a second tubular conduit (26) which passes through an outlet portion (46) of the first container (22); and
wherein the material urging means (28) further comprises vacuum generation means (28) connected thereto.

16. Material transfer apparatus (10) according to claim 15, wherein the inlet (34A) and outlet (46) portions are spaced apart across a diameter of the first container (22) in order to prevent material (48) exiting the inlet portion (34A) from entering the outlet portion (46); and
wherein a filter is provided on the outlet portion (46) to further prevent the material (48) from entering the outlet portion (46) and hence the vacuum generation means (28); and
wherein the inlet (34A) and outlet (46) portions are located toward an upper end of the first container (22).

17. Material transfer apparatus (10) according to any of claim 14-16, wherein the second container (14) contains pressurised material (48) and is further located upstream from the intermediate vacuum generation means (18) ; and
wherein the second container (14) is connected to the first container (22) such that material (48) may be transferred therebetween; and
wherein the connection between the first (22) and second (14) containers passes through at least a portion of the intermediate vacuum generation means (18).

18. Material transfer apparatus (10) according to any of claims 13 to 17 wherein the first (22) and second (14) containers are substantially cylindrical silo containers; and
wherein the or each container (14; 22) is provided with a plurality of circumferentially arranged material chutes (36), having a multi-sided cross section, adapted to substantially prevent the material (48) within the or each container (14; 22) from becoming compacted such that the material (48) will no longer flow; and
wherein a separation device (40) is provided adjacent the chutes (36) in order to substantially prevent large lumps of material (48) from settling within the chutes (36).

## Patentansprüche

1. Ein Verfahren zum Umladen von Material (48) von einem ersten Ort zu einem zweiten Ort, das folgende Schritte beinhaltet:
Bereitstellen eines ersten Behälters (22), der Fluid (50) enthält;
Bereitstellen eines zweiten Behälters (14) stromaufwärts von dem ersten Behälter (22) Umladen von Material (48) von einem ersten Ort außerhalb des ersten Behälters (22) zu einem zweiten Ort innerhalb des ersten Behälters (22); und
mindestens teilweises Absaugen von Fluid (50) von innerhalb des ersten Behälters (22), um das Voranbewegen des Materials (48) in den ersten Behälter (22) zu ermöglichen; **gekennzeichnet durch** das
Bereitstellen eines ersten Pumpmittels (12) zum Pumpen von Material (48) in den zweiten Behälter (14) unter Druck, so dass das Material (48) in dem zweiten Behälter (14) abgeladen wird, bevor es zu dem ersten Behälter (22) umgeladen wird.

2. Verfahren gemäß Anspruch 1, wobei das Umladen von Material von dem ersten Ort zu dem zweiten Ort und das Absaugen des Fluids (50) aus dem ersten Behälter (22) im Wesentlichen gleichzeitig durchgeführt werden.

3. Verfahren gemäß einem der Ansprüche 1 oder 2, wobei das Verfahren weiter den Schritt des Umladens des Materials (48) entlang einer ersten Leitung (20; 24) unter Ausüben von Druck stromaufwärts von dem Material (48) beinhaltet, um das Material von einem ersten Ort außerhalb des ersten Behälters (22) zu einem zweiten Ort innerhalb des ersten Behälters (22) voranzubewegen; und
wobei das Verfahren weiter den Schritt des mindestens teilweisen Absaugens von Luft (50) aus dem ersten Behälter (22) entlang einer zweiten Leitung (26) beinhaltet, um im Wesentlichen ein Vakuum innerhalb des ersten Behälters (22) herzustellen.

4. Verfahren gemäß einem der vorangehenden Ansprüche, wobei das Fluid (50) mindestens teilweise aus dem ersten Behälter (22) abgesaugt wird, während im Wesentlichen die Entnahme des Materials (48) aus dem Behälter (22) vermieden wird.

5. Verfahren gemäß einem der vorangehenden Ansprüche, wobei der zweite stromaufwärtige Behälter (14) eine vorübergehende Lagereinrichtung für zu transportierendes Material (48) bereitstellt.

6. Verfahren gemäß Anspruch 3 oder gemäß den Ansprüchen 4 oder 5, wenn abhängig von Anspruch 3, wobei der Schritt des Umladens des Materials (48) das Erhöhen des Drucks innerhalb des zweiten Behälters (14) beinhaltet, so dass der erhöhte Druck auf das gesamte Material (48) innerhalb des zweiten Behälters (14) wirkt und es in eine Ablassleitung (42) und anschließend in die erste Leitung (20; 24) ausstößt.

7. Verfahren gemäß gemäß Anspruch 3 oder gemäß den Ansprüchen 4 oder 5, wenn abhängig von Anspruch 3, wobei der Schritt des Umladens des Materials (48) das Unterdrucksetzen des Raums über dem Material (48) am oberen Teil des zweiten Behälters (14) beinhaltet, was dazu führt, dass das gesamte Material (48) innerhalb des zweiten Behälters (14) zu dem unteren Teil des zweiten Behälters (14) und in eine Ablassleitung (42) und anschließend in die erste Leitung (20; 24) gedrängt wird.

8. Verfahren gemäß einem der vorangehenden Ansprüche, wobei Druck auf den zweiten Behälter (14) und das Material (48) darin ausgeübt wird, wenn der zweite Behälter (14) ein gewünschtes Niveau an Material (48) enthält; und
wobei der zweite Behälter (14) dann durch Absaugen von mindestens einem Anteil des Materials (48) innerhalb des zweiten Behälters (14) entlang einer Ablassleitung (42) entleert wird.

9. Verfahren gemäß Anspruch 8 und 3, wobei der auf den zweiten Behälter (14) ausgeübte Druck kombiniert mit dem Absaugen des Fluids (50) aus dem ersten Behälter (22) eine Druckdifferenz über dem sich entlang der Länge der ersten Leitung (20; 24) bewegenden Material (48) bereitstellt.

10. Verfahren gemäß Anspruch 8 und 3, wobei die Handlung des Absaugens von mindestens einem Anteil des Materials (48) entlang der Ablassleitung (42) von auf den zweiten Behälter (14) ausgeübtem Druck unterstützt wird; und
wobei die Ablassleitung (42) über ein zwischenliegendes Vakuumbildungsmittel (18) mit der ersten Leitung (20; 24) in Verbindung steht, um zuzulassen, dass das Material von dem zweiten Behälter (14) zu dem ersten Behälter (22) gefördert wird.

11. Verfahren gemäß Anspruch 10, wobei sich der erste Behälter (22) auf einem Transportmittel befindet und sich der zweite Behälter (14) proximal zu dem ersten Pumpmittel (12) befindet und sich außerdem proximal zu einer Zufuhr des Materials (48) in Form einer Primärbohrgutquelle auf einem Bohrgerät befindet; und
wobei sich das zwischenliegende Umladevakuumbildungsmittel (18) proximal zu und stromabwärts von dem zweiten Behälter (14) befindet; und
wobei eine Umladeleitung (24) das zwischenliegende Vakuumbildungsmittel (18) mit dem ersten Behälter (22) verbindet.

12. Verfahren gemäß einem der vorangehenden Ansprüche, wobei das Material (48) Bohrgut (48) beinhaltet.

13. Eine Materialumladevorrichtung (10), die Folgendes beinhaltet:
einen ersten Behälter (22), der Fluid (50) enthält;
Materialumlademittel, die dazu angepasst sind, Material (48) von einem ersten Ort (12, 14, 18) außerhalb des ersten Behälters (22) zu einem zweiten Ort innerhalb des ersten Behälters (22) umzuladen;
einen zweiten Behälter (14), der sich stromaufwärts von dem ersten Behälter (22) befindet; und
Materialdrängmittel (28), die dazu angepasst sind, durch mindestens teilweise Absaugen von Fluid von innerhalb des ersten Behälters (22), das Umladen des Materials (48) von dem ersten Ort (12, 14, 18) zu dem zweiten Ort innerhalb des ersten Behälters (22) zu ermöglichen;
**gekennzeichnet durch**
ein erstes Pumpmittel (12) zum Pumpen von Material (48) in den zweiten Behälter (14) unter Druck, so dass das Material (48) in dem zweiten Behälter (14) abgeladen wird, bevor es zu dem ersten Behälter (22) umgeladen wird.

14. Materialumladevorrichtung (10) gemäß Anspruch 13, weiter beinhaltend eine erste röhrenförmige Leitung (20; 24), die durch einen Einlassabschnitt (34A) des ersten Behälters (22) und ein damit verbundenes zwischenliegendes Vakuumbildungsmittel (18) verläuft.

15. Materialumladevorrichtung (10) gemäß Anspruch 14, wobei das zwischenliegende Vakuumbildungsmittel (18) eine Pumpe und ein Vakuumgerät beinhaltet und dazu angepasst ist, nach Wunsch selektiv zwischen dem Pump- und dem Vakuumerzeugungsmodus umgeschaltet zu werden; und
wobei das zwischenliegende Vakuumbildungsmittel (18) außerdem einen Zwischenlagertank (30) beinhaltet und sich stromaufwärts von dem ersten Behälter (22) befindet; und wobei
das Materialdrängmittel (28) eine zweite röhrenförmige Leitung (26) beinhaltet, die durch einen Auslassabschnitt (46) des ersten Behälters (22) verläuft; und
wobei das Materialdrängmittel (28) weiter damit verbundene Vakuumbildungsmittel (28) beinhaltet.

16. Materialumladevorrichtung (10) gemäß Anspruch 15, wobei der Einlass- (34A) und der Auslass-(46)-abschnitt über einen Durchmesser des ersten Behälters (22) beabstandet sind, um zu verhindern, dass Material (48) aus dem Einlassabschnitt (34A) austritt und in den Auslassabschnitt (46) eintritt; und
wobei an dem Auslassabschnitt (46) ein Filter bereitgestellt ist, um weiter zu verhindern, dass das Material (48) in den Auslassabschnitt (46) und folglich das Vakuumbildungsmittel (28) eintritt; und
wobei sich der Einlass- (34A) und der Auslass-(46)-abschnitt zu einem oberen Ende des ersten Behälters (22) hin befinden.

17. Materialumladevorrichtung (10) gemäß einem der Ansprüche 14-16, wobei der zweite Behälter (14) unter Druck stehendes Material (48) enthält und sich weiter stromaufwärts von dem zwischenliegenden Vakuumbildungsmittel (18) befindet; und
wobei der zweite Behälter (14) mit dem ersten Behälter (22) verbunden ist, so dass Material (48) zwischen ihnen umgeladen werden kann; und
wobei die Verbindung zwischen dem ersten (22) und dem zweiten (14) Behälter durch mindestens einen Abschnitt des zwischenliegenden Vakuumbildungsmittels (18) verläuft.

18. Materialumladevorrichtung (10) gemäß einem der Ansprüche 13 bis 17, wobei es sich bei dem ersten (22) und dem zweiten (14) Behälter um im Wesentlichen zylindrische Silobehälter handelt; und
wobei der oder jeder Behälter (14; 22) mit einer Vielzahl von in Umfangsrichtung angeordneten Materialrinnen (36) versehen ist, die einen vielseitigen Querschnitt aufweisen, dazu angepasst sind, im Wesentlichen zu verhindern, dass das Material (48) innerhalb des oder jedes Behälters (14; 22) verdichtet wird, so dass das Material (48) nicht mehr fließt; und
wobei ein Trenngerät (40) neben den Rinnen (36) bereitgestellt ist, um im Wesentlichen zu verhindern, dass sich große Klumpen von Material (48) innerhalb der Rinnen (36) absetzen.

## Revendications

1. Un procédé pour transférer de la matière (48) d'un premier emplacement à un deuxième emplacement comprenant les étapes consistant à :
fournir un premier conteneur (22) contenant du fluide (50) ;
fournir un deuxième conteneur (14) en amont du premier conteneur (22) ;
transférer de la matière (48) d'un premier emplacement à l'extérieur du premier conteneur (22) à un deuxième emplacement à l'intérieur du premier conteneur (22) ; et
évacuer au moins partiellement du fluide (50) de l'intérieur du premier conteneur (22) afin de faciliter la progression de la matière (48) jusque dans le premier conteneur (22) ;
**caractérisé par** le fait de
fournir un premier moyen de pompage (12) pour pomper de la matière (48) jusque dans le deuxième conteneur (14) sous pression de telle sorte que la matière (48) soit déposée dans le deuxième conteneur (14) avant d'être transférée au premier conteneur (22).

2. Un procédé selon la revendication 1, dans lequel le transfert de matière du premier emplacement au deuxième emplacement et l'évacuation du fluide (50) du premier conteneur (22) sont réalisés de manière substantiellement simultanée.

3. Un procédé selon l'une ou l'autre des revendications 1 et 2, le procédé comprenant en outre l'étape consistant à transférer la matière (48) le long d'une première conduite (20 ; 24) sous application de pression en amont de la matière (48), afin de faire progresser la matière d'un premier emplacement à l'extérieur du premier conteneur (22) à un deuxième emplacement à l'intérieur du premier conteneur (22) ; et
le procédé comprenant en outre l'étape consistant à évacuer au moins partiellement de l'air (50) du premier conteneur (22) le long d'une deuxième conduite (26) afin de créer substantiellement un vide à l'intérieur du premier conteneur (22).

4. Un procédé selon n'importe quelle revendication précédente, dans lequel le fluide (50) est au moins partiellement évacué du premier conteneur (22) tout en évitant substantiellement que la matière (48) soit retirée du conteneur (22).

5. Un procédé selon n'importe quelle revendication précédente, dans lequel le deuxième conteneur en amont (14) fournit une installation de stockage temporaire pour de la matière (48) à transporter.

6. Un procédé selon la revendication 3 ou les revendications 4 ou 5 lorsqu'elles dépendent de la revendication 3, dans lequel l'étape consistant à transférer la matière (48) comprend le fait d'accroître la pression à l'intérieur du deuxième conteneur (14) de telle sorte que la pression accrue agisse sur et expulse toute la matière (48) à l'intérieur du deuxième conteneur (14) jusque dans une conduite de décharge (42) et par la suite jusque dans la première conduite (20 ; 24).

7. Un procédé selon la revendication 3 ou les revendications 4 ou 5 lorsqu'elles dépendent de la revendication 3, dans lequel l'étape consistant à transférer la matière (48) comprend le fait de pressuriser l'espace au-dessus de la matière (48) en haut du deuxième conteneur (14), ce qui a pour résultat que la totalité de la matière (48) à l'intérieur du deuxième conteneur (14) est poussée vers le fond du deuxième conteneur (14) et jusque dans une conduite de décharge (42) et par la suite jusque dans la première conduite (20 ; 24).

8. Un procédé selon n'importe quelle revendication précédente, dans lequel une pression est appliquée sur le deuxième conteneur (14) et la matière (48) qu'il renferme lorsque le deuxième conteneur (14) contient un niveau de matière (48) souhaité ; et
dans lequel le deuxième conteneur (14) est ensuite vidé en évacuant au moins une portion de la matière (48) à l'intérieur du deuxième conteneur (14), le long d'une conduite de décharge (42).

9. Un procédé selon la revendication 8 et 3, dans lequel la pression appliquée sur le deuxième conteneur (14) combinée à l'évacuation du fluide (50) du premier conteneur (22) fournit une pression différentielle de part et d'autre de la matière (48) se déplaçant sur la longueur de la première conduite (20 ; 24).

10. Un procédé selon la revendication 8 et 3, dans lequel l'action d'évacuer au moins une portion de la matière (48) le long de la conduite de décharge (42) est assistée par la pression appliquée sur le deuxième conteneur (14) ; et
dans lequel la conduite de décharge (42) est en communication fluidique avec la première conduite (20 ; 24) via un moyen de génération de vide intermédiaire (18) afin de permettre l'acheminement de la matière du deuxième conteneur (14) jusqu'au premier conteneur (22).

11. Un procédé selon la revendication 10, dans lequel le premier conteneur (22) est situé sur un moyen de transport et le deuxième conteneur (14) est situé de façon proximale au premier moyen de pompage (12) et, en outre, est situé de façon proximale à une alimentation en matière (48) sous la forme d'une source de déblais de forage primaire sur un appareil de forage ; et
dans lequel le moyen de génération de vide pour transfert intermédiaire (18) est situé de façon proximale à et en aval du deuxième conteneur (14) ; et
dans lequel une conduite de transfert (24) raccorde le moyen de génération de vide intermédiaire (18) au premier conteneur (22).

12. Un procédé selon n'importe quelle revendication précédente, dans lequel la matière (48) comprend des déblais de forage (48).

13. Appareil de transfert de matière (10) comprenant :
un premier conteneur (22) contenant du fluide (50) ;
un moyen de transfert de matière conçu pour transférer de la matière (48) d'un premier emplacement (12, 14, 18) à l'extérieur du premier conteneur (22) à un deuxième emplacement à l'intérieur du premier conteneur (22) ;
un deuxième conteneur (14) situé en amont par rapport au premier conteneur (22) et un moyen de poussée de matière (28) conçu pour faciliter le transfert de la matière (48) du premier emplacement (12, 14, 18) au deuxième emplacement à l'intérieur du premier conteneur (22) en évacuant au moins partiellement du fluide de l'intérieur du premier conteneur (22) ;
**caractérisé par**
un premier moyen de pompage (12) destiné à pomper de la matière jusque dans le deuxième conteneur (14) sous pression de telle sorte que la matière (48) soit déposée dans le deuxième conteneur (14) avant d'être transférée au premier conteneur (22).

14. Appareil de transfert de matière (10) selon la revendication 13, comprenant en outre une première conduite tubulaire (20 ; 24) qui passe à travers une portion d'entrée (34A) du premier conteneur (22) et un moyen de génération de vide intermédiaire (18) raccordé à celle-ci.

15. Appareil de transfert de matière (10) selon la revendication 14, dans lequel le moyen de génération de vide intermédiaire (18) comprend une pompe et un dispositif de vide et est conçu pour être commuté de manière sélective entre les modes de pompage et de production de vide comme désiré ; et
dans lequel le moyen de génération de vide intermédiaire (18) comprend également une cuve de stockage intermédiaire (30) et est situé en amont du premier conteneur (22) ; et dans lequel
le moyen de poussée de matière (28) comprend une deuxième conduite tubulaire (26) qui passe à travers une portion de sortie (46) du premier conteneur (22) ; et
dans lequel le moyen de poussée de matière (28) comprend en outre un moyen de génération de vide (28) raccordé à celui-ci.

16. Appareil de transfert de matière (10) selon la revendication 15, dans lequel les portions d'entrée (34A) et de sortie (46) sont espacées l'une de l'autre de part et d'autre d'un diamètre du premier conteneur (22) afin d'empêcher que de la matière (48) sortant de la portion d'entrée (34A) ne pénètre dans la portion de sortie (46) ; et
dans lequel un filtre est fourni sur la portion de sortie (46) pour empêcher plus avant que la matière (48) ne pénètre dans la portion de sortie (46) et donc dans le moyen de génération de vide (28) ; et
dans lequel les portions d'entrée (34A) et de sortie (46) sont situées vers une extrémité supérieure du premier conteneur (22).

17. Appareil de transfert de matière (10) selon n'importe lesquelles des revendications 14 à 16, dans lequel le deuxième conteneur (14) contient de la matière pressurisée (48) et est en outre situé en amont par rapport au moyen de génération de vide intermédiaire (18) ; et
dans lequel le deuxième conteneur (14) est raccordé au premier conteneur (22) de telle sorte que de la matière (48) puisse être transférée entre eux ; et
dans lequel le raccord entre les premier (22) et deuxième (14) conteneurs passe à travers au moins une portion du moyen de génération de vide intermédiaire (18).

18. Appareil de transfert de matière (10) selon n'importe lesquelles des revendications 13 à 17, dans lequel les premier (22) et deuxième (14) conteneurs sont des conteneurs silo substantiellement cylindriques ; et
dans lequel le ou chaque conteneur (14 ; 22) est pourvu d'une pluralité de goulottes pour matière arrangées de manière circonférentielle (36), présentant une coupe transversale polygonale, conçues pour empêcher substantiellement que la matière (48) à l'intérieur du ou de chaque conteneur (14 ; 22) ne vienne à se compacter de sorte que la matière (48) ne s'écoule plus ; et
dans lequel un dispositif de séparation (40) est fourni adjacent aux goulottes (36) afin d'empêcher substantiellement que de gros morceaux de matière (48) ne se logent à l'intérieur des goulottes (36).
